# EUROPÄISCHE PATENTSCHRIFT

(11) **EP 4 237 280 B1**
(45) Veröffentlichungstag und Bekanntmachung des Hinweises auf die Patenterteilung: **03.09.2025**
(21) Anmeldenummer: 21801084.1
(22) Anmeldetag: 26.10.2021
(51) Int. Cl.: B60N 2/28

(54) **KINDERSITZ MIT EINEM FANGKÖRPER ZUR ANBRINGUNG AUF EINEM KRAFTFAHRZEUGSITZ**
CHILD SEAT WITH IMPACT SHIELD FOR MOUNTING ON A MOTOR VEHICLE SEAT
SIÈGE ENFANT AVEC PROTECTION CONTRE LES CHOCS À MONTER SUR UN SIÈGE DE VÉHICULE AUTOMOBILE

(30) Priorität: 30.10.2020 DE 202020106246 U
(43) Veröffentlichungstag der Anmeldung: 06.09.2023
(73) Patentinhaber: CYBEX GmbH, 95448 Bayreuth (DE)
(72) Erfinder: THURN, Christoph, 95448 Bayreuth (DE); WEI, Xu, Lujia Town 215331 (CN)
(74) Vertreter: Meissner Bolte Partnerschaft mbB
(86) Internationale Anmeldenummer: PCT/EP2021/079594
(87) Internationale Veröffentlichungsnummer: WO 2022/090180

(56) Entgegenhaltungen:
- EP-A2- 0 447 099
- DE-A1- 19 954 383
- DE-A1- 2 641 985
- DE-A1- 3 313 870
- US-A- 4 033 623
- US-A- 5 800 012

## Beschreibung

Die Erfindung betrifft einen Fangkörper für einen Kindersitz zur Anbringung auf einem Kraftfahrzeugsitz sowie einen entsprechenden mit einem Fangkörper ausgestatteten Kindersitz.

Kindersitze mit Fangkörpern sind grundsätzlich bekannt. DE 199 54 383 A1 offenbart z.B. einen Fangkörper aus dem Stand der Technik.

Einige der Merkmale eines solchen Kindersitzes werden nachfolgend beschrieben, diese können auch bei erfindungsgemäßen Ausführungsformen realisiert sein.

Der Hauptkörper eines solchen Kindersitzes weist im Allgemeinen zumindest einen Sitzabschnitt, optional auch einen Rückenabschnitt (ggf. inklusive Kopfstütze) auf. Weiterhin können eine Basis, ein Stützfuß und/oder weitere Elemente vorgesehen sein. Der Sitzabschnitt und - falls vorhanden - der Rückenabschnitt und/oder die Kopfstütze können Seitenteile umfassen, die dem Hauptkörper einen schalenartigen Charakter geben können (Sitzschale). Der Hauptkörper eines Kindersitzes kann weiterhin z. B. mindestens einen Seitenaufprallschutz, mindestens eine Gurtführung und/oder mindestens ein Verankerungselement (z. B. Isofix- Verankerungselement oder LATCH-Verankerungselement) und/oder weitere Elemente aufweisen. Der Sitzabschnitt des Hauptkörpers kann eine Sitzfläche zum Aufnehmen des Gesäßes, ggf. auch von Beinen oder Beinabschnitten eines im Kindersitz aufgenommenen Kindes (oder Dummys, insbesondere Dummys der Q- oder P-Serie) aufweisen, sowie rechte und linke seitliche Bereiche, die auch als Seitenteile ausgebildet sein können. Gegebenenfalls können die Seitenteile auch so ausgebildet sein, dass sich zwischen einem oberen (armlehnenartig mit einem hinteren Bereich an den Sitzabschnitt angeschlossenen) Abschnitt und einem unteren (die Sitzfläche im Wesentlichen zur Seite fortsetzenden) Bereich eine Aufnahmeöffnung ergibt (die die Form eines Hörnchens aufweisen kann). Der Hauptkörper, insbesondere der Sitzabschnitt kann mindestens ein erstes Befestigungsmittel (z. B. ein rechtes und ein linkes Befestigungselement) zur Befestigung eines Fangkörpers aufweisen.

Ein Fangkörper (in üblicher Bauweise, wobei einige oder alle der nachfolgenden Merkmale auch für den erfindungsgemäßen Fangkörper zutreffen können) ist zumindest abschnittsweise starr und dafür ausgebildet, ein Kind in einem Kindersitz zurückzuhalten. Dazu weist der Fangkörper im Allgemeinen einen (in Bezug auf eine laterale Ausdehnung) mittleren Abschnitt auf, der zum Zurückhalten eines Kindes, insbesondere eines Becken-, Abdomen- und/oder Brustbereiches des Kindes ausgebildet ist, sowie je einen rechten und linken seitlichen Abschnitt, der insbesondere zum Abstützen auf seitliche Bereiche des Sitzabschnittes (ggf. auf den Seitenteilen) ausgebildet ist. Alternativ oder zusätzlich können die seitlichen Abschnitte als Anschlussteile vorgesehen sein, die zum (formschlüssigen) Eingriff in eine dafür vorgesehene (jeweilige) Aufnahme (ggf. die obige Aufnahmeöffnung des Sitzabschnittes) vorgesehen sind (siehe beispielsweise GB 2 266 839 A). Gegebenenfalls kann der Fangkörper mindestens ein zweites Befestigungselement zum Zusammenwirken mit dem ersten Befestigungselement des Hauptkörpers aufweisen, um eine Befestigung des Fangkörpers auf dem Hauptkörper zu ermöglichen. Vorteilhafterweise ist der Fangkörper zumindest abschnittsweise energieabsorbierend und/oder aus einem deformierbaren, insbesondere plastisch deformierbaren Material (beispielsweise EPP oder EPS oder EPO) ausgebildet sein (vgl. EP 3 626 518 A1). Zusätzlich oder vorzugsweise alternativ zum zweiten Befestigungselement kann der Fangkörper eine Gurtführung für einen Fahrzeuggurt aufweisen (insbesondere zur Befestigung des Fangkörpers am Hauptkörper und/oder zur gemeinsamen Befestigung von Fangkörper und Hauptkörper am Fahrzeugsitz).

Im Allgemeinen (insbesondere auch bei erfindungsgemäßen Ausführungsformen) kann der Fangkörper bzw. dessen mittlerer Abschnitt eine (im ordnungsgemäßen Gebrauch dem Becken/Abdomen bzw. der Brust des Kindes zugewandte) Innenseite und eine (im ordnungsgemäßen Gebrauch den Beinen oder einem Beinabschnitt des Kindes zugewandte) Unterseite aufweisen. Der Fangkörper kann zudem eine der Innenseite (zumindest im Wesentlichen) gegenüberliegende Außenseite, sowie eine der Unterseite (zumindest im Wesentlichen) gegenüberliegende Oberseite aufweisen, so dass zumindest abschnittsweise, insbesondere im mittleren Bereich, beispielsweise ein rechteckiger, ggf. Parallelogramm- oder trapezförmiger, ggf. auch ovaler oder runder Querschnitt vorliegen kann.

Die Stand der Technik bekannten Lösungen werden in konstruktiver bzw. sicherheitstechnischer Hinsicht als noch verbesserungswürdig angesehen.

Es ist daher insbesondere Aufgabe der Erfindung, einen Fangkörper bzw. einen entsprechenden Kindersitz mit Fangkörper vorzuschlagen, der auf vergleichsweise einfache Art und Weise das Kind sicher im Kindersitz bzw. am Fahrzeug halten kann. Insbesondere sollen Risiken im Zusammenhang mit Beschleunigungen des Kindes bei einem Frontal-Unfall möglichst reduziert werden.

Insbesondere wird die Aufgabe durch Anspruch 1 gelöst.

Insbesondere wird die Aufgabe gelöst durch einen Fangkörper für einen Kindersitz zur Anbringung auf einem Kraftfahrzeugsitz, wobei der Kindersitz einen Hauptkörper zur Aufnahme eines Kindes aufweist, wobei der Fangkörper einen ersten Oberflächenabschnitt, nämlich einen Kopfaufprallabschnitt aufweist, auf den im Falle einer starken Verzögerung der Kopf des Kindes aufprallt, wobei der Kopfaufprallabschnitt mindestens einen Rücksprung aufweist und/oder zumindest teilweise weicher ausgebildet ist als mindestens ein zweiter Oberflächenabschnitt des Fangkörpers.

Ein Kerngedanke der Erfindung liegt darin, einen Kopfaufprallabschnitt, auf dem im Falle einer starken Verzögerung der Kopf des Kindes aufprallt (also insbesondere bei einem Frontal-Aufprall bzw. Frontal-Unfall) vergleichsweise weich ausgebildet auszubilden und/oder mit einer Ausnehmung auszustatten bzw., gemäß einem noch allgemeineren Erfindungsgedanken, so auszubilden, dass er dem aufprallenden Kopf vergleichsweise wenig Widerstand entgegensetzt und/oder erst möglichst spät (wenn die Bewegung des Kopfes bereits sehr weit fortgeschritten ist) mit dem Kopf wechselwirkt. Insbesondere wurde erfindungsgemäß erkannt, dass bei einem Frontal-Aufprall der Kopf des Kindes auf den Fangkörper, insbesondere dessen Oberseite, so aufschlagen kann, dass daraus ein Verletzungsrisiko resultiert. Insbesondere kann dadurch das Verletzungsrisiko des Kindes signifikant erhöht werden. Weiterhin wurde auch berücksichtigt, dass es im Allgemeinen als vorteilhaft angesehen werden kann, die Innenseite des Fangkörpers vergleichsweise groß zu dimensionieren bzw. so groß, dass der Fangkörper Abdomen und Brust des (zumindest kleinsten für die Nutzung des Kindersitzes zugelassenen) Kindes zurückhält, um eine möglichst flächige Verteilung von möglichen Rückhaltekräften zu ermöglichen. Die Unterseite kann üblicherweise ebenfalls so dimensioniert sein, dass sie (zumindest in etwa) die Oberschenkel des (zumindest kleinsten für die Nutzung des Kindersitzes zugelassenen) Kindes abdeckt, was sich in verschiedenen Unfallszenarien (beispielsweise bei einem Überschlag) als stabilisierend erwiesen hat.

Insbesondere wurde erfindungsgemäß berücksichtigt bzw. erkannt, dass der Aufschlag des Kopfes des Kindes auf den Fangkörper (sofern der Kopf nicht bereits zu einem sehr frühen Zeitpunkt des Unfallgeschehens zurückgehalten werden kann) vergleichsweise problematisch ist, da dadurch Belastung und Verletzungsgefahr für das Kind steigt.

Vorzugsweise weist der Fangkörper keine aktive Schutzeinrichtung (oder zumindest keinen aufblasbaren Airbag) auf. Der Fangkörper kann jedoch optional auch mit einer aktiven Schutzreinrichtung (bzw. einem Airbag) ausgestattet sein.

Unter einem Oberflächenabschnitt soll insbesondere ein Abschnitt verstanden werden, der eine (äußere Oberfläche) umfasst. Der (jeweilige) Oberflächenabschnitt kann auch (insbesondere wenn es um Materialeigenschaften geht) als räumlicher Abschnitt verstanden werden, wobei eine Tiefe des Oberflächenabschnittes auf mindestens oder genau 1 cm oder mindestens oder genau 2 cm und/oder höchstens 10 cm oder höchstens 5 cm festgelegt sein kann (was nicht bedeuten muss - aber kann -, dass bei der entsprechenden Tiefe eine strukturelle Grenze vorliegt; hier geht es insbesondere um eine Vorgabe, anhand der verschiedene Oberflächenabschnitte miteinander verglichen werden können). Ein eventueller Bezug und/oder eine sonstige (vergleichsweise dünne, ggf. forminstabile oder formstabile) Abdeckung soll(en) dabei vorzugsweise unberücksichtigt bleiben, kann jedoch auch (gerade wenn eine solche Abdeckung auch den Rücksprung mit ausbildet bzw. nachvollzieht und/oder zu einer vergleichsweise weichen Ausbildung wesentlich beiträgt) berücksichtigt werden.

Der Fangkörper kann neben den bereits einleitend dargestellten Merkmalen noch durch weitere Merkmale charakterisiert werden. Vorzugsweise soll unter einem Fangkörper eine Einrichtung verstanden werden, die (vorzugsweise zumindest abschnittsweise lösbar, insbesondere entfernbar) befestigbar an dem Hauptkörper des Kindersitzes befestigt ist, um das Kind am Hauptkörper zu halten. Der Fangkörper ist vorzugsweise (zumindest teilweise) formstabil (insbesondere in dem Sinne, dass er nicht unter seinem eigenen Gewicht und/oder bei nur geringfügigen externen Kräften in sich zusammenfällt).

Der Fangkörper kann aus Kunststoff hergestellt sein (zumindest anteilig, beispielsweise zumindest 80 Gew.-%) und/oder ein Polster (beispielsweise Schaumstoffpolster) umfassen. Der Fangkörper kann zumindest zu 30 Gew.-%, vorzugsweise 60 Gew.-% aus einem festen und/oder unporösem Material (Kunststoff) gebildet sein. Der Fangkörper kann zumindest zu 30 Vol.-%, vorzugsweise mindestens 60 Vol.-% aus einem porösen Material (insbesondere aufgeschäumten Kunststoff, z.B. EPS oder EPP) gebildet sein. Der Fangkörper kann mindestens 200 g oder mindestens 500 g und/oder höchstens 5 kg oder höchstens 2 kg wiegen.

Der Fangkörper kann mindestens eine Führungseinrichtung aufweisen, um einen Fahrzeuggurt (und/oder sonstigen Gurt, beispielsweise einen am Hauptkörper montierten oder montierbaren Gurt) so zu führen, dass der Fangkörper (insbesondere sowohl der Hauptkörper als auch der Fangkörper) an dem Fahrzeugsitz befestigt werden kann bzw. der Fangkörper an dem Hauptkörper befestigt werden kann.

Der Kindersitz ist vorzugsweise zur vorwärtsgerichteten Anordnung auf dem Fahrzeugsitz konfiguriert (so dass das Kind in Fahrtrichtung blickt). Unter einer Fahrtrichtung (Vorwärtsrichtung) ist insbesondere eine Bewegung des Fahrzeugs in Geradeausfahrt zu verstehen, da ein im Kindersitz sitzendes Kind (wenn es geradeaus blickt) in Fahrtrichtung blickt. Wenn das (geradeaus) vorwärtsfahrende Fahrzeug einer (plötzlichen) Verzögerung ausgesetzt wird, beispielsweise durch einen Frontal-Unfall, werden Kind und Kindersitz Trägheitskräften ausgesetzt, die in Richtung der Fahrtrichtung wirken.

Unter einer (normalen) Gebrauchssituation soll insbesondere eine Situation zu verstehen sein, bei der der Fangkörper auf dem Hauptkörper angeordnet (montiert) ist (und zwar insbesondere gemäß den Instruktionen des Herstellers des Kindersitzes) und bei der ein Kind sicher durch den Kindersitz gestützt und von diesem bzw. dessen Fangkörper gehalten werden kann (insbesondere gemäß den Vorgaben des Herstellers des Kindersitzes).

Unter einer plötzlichen Verzögerung (bzw. einem Ereignis mit einer plötzlichen Verzögerung) soll insbesondere ein Ereignis verstanden werden, bei dem hohe Beschleunigungen (bzw. Verzögerungen) auftreten, im Vergleich zu einer normalen Fahrt in einem Fahrzeug (z. B. Pkw). Insbesondere ein Aufprall (Frontal-Aufprall) oder ein sonstiger Unfall soll als Ereignis mit plötzlicher Verzögerung verstanden werden. Eine solche Verzögerung kann insbesondere dann als plötzliche Verzögerung verstanden werden, wenn die Beschleunigungen (bzw. Verzögerungen) so groß sind, dass eine aktive Schutzeinrichtung, wie beispielsweise ein Airbag, im Kraftfahrzeug ausgelöst wird. Verzögerungen während eines Ereignisses einer plötzlichen Verzögerung können ggf. 2g, ggf. sogar 3g oder sogar 5g oder sogar 8g überschreiten (bzw. bei Überschreiten dieser Grenzwerte als ein entsprechendes Ereignis mit plötzlicher Verzögerung verstanden werden). Insbesondere ein Aufprall ("Crash"), wie er als "Frontcrash" in UN ECE-R44 oder in UN ECE-R129 (Gültigkeit zum Anmelde- bzw. Prioritätszeitpunkt, abzurufen z.B. auf der Internetseite der UNECE www.unece.org) beschrieben wird, soll als Ereignis plötzlicher Verzögerung verstanden werden.

Unter einem Kopfaufprallabschnitt soll insbesondere ein Abschnitt des Fangkörpers verstanden werden, auf den der Kopf des Kindes bei einer (plötzlichen) Verzögerung prallt (oder bei noch stärkerer Verzögerung prallen würde - erfindungsgemäß soll der Kopfaufprallabschnitt ja gerade einen Rücksprung aufweisen, so dass der Kopf möglichst nicht oder jedenfalls besonders spät aufprallt).

Dieser Bereich kann vorzugsweise durch einen Q-Dummy, wie in der UN ECE-R129 (Gültigkeit zum Anmelde- bzw. Prioritätszeitpunkt der vorliegenden Beschreibung und/oder zum 31. Dezember 2013) bestimmt werden. Q-Dummys existieren in den Größen Q0, Q1, Q1.5, Q3, Q6 und Q10, wobei die Zahl nach dem Q das (ungefähre) Alter des Kindes angibt, dem der Dummy entsprechen soll.

Der vorliegende Sitz bzw. dessen Fangkörper soll insbesondere für Kinder von einer Mindestgröße bis zu einer Maximalgröße zugelassen werden, wobei die Mindestgröße mindestens 60 cm, vorzugsweise mindestens 75 cm betragen kann und/oder die Maximalgröße höchstens 130 cm, vorzugsweise höchstens 116 cm betragen kann. Alternativ oder zusätzlich kann der Sitz zumindest für Dummy (bzw. Kinder, die durch die entsprechenden Dummys nachgebildet werden) von Q1 oder Q1.5 bis Q6 ausgelegt sein.

Bei der erwähnten Norm UN ECE-R129 kann es sich konkret um die "Regulation No. 129 - Uniform provisions concerning the approval of enhanced child restraint systems used on board of motor vehicles (ECRS)" handeln bzw.

E/ECE 324/Rev.2/Add.128 - E/ECE/Trans.505/Rev.2/Add.128 handeln, beispielsweise gültig zum 9. Juli 2013 und/oder 31. Dezember 2013 und/oder eben zum Prioritäts- oder Anmeldezeitpunkt).

Konkret können als Dummys die Dummys des Herstellers Humanetics herangezogen werden. Zusätzliche Informationen lassen sich den Handbüchern des Herstellers Humanetics entnehmen (worauf auch die Norm UN ECE-R129 verweist).

Vorzugsweise wird der Kopfaufprallabschnitt durch einen Abschnitt der Oberseite des Fangkörpers definiert. Insoweit der Kopfaufprallabschnitt nicht konkret (beispielsweise unter Berücksichtigung eines Dummys, wie oben erläutert) bestimmt wird, kann auch, alternativ, ein Bereich des oben bezeichneten Kindersitzes als Kopfaufprallabschnitt angesehen werden, der sich von der Innenseite des Fangkörpers (bzw. deren oberen Rand) erstreckt (ggf. in einem Abstand von mindestens 2 cm oder mindestens 5 cm zu diesem Rand) und zwar nach vorne über etwa (in der maximalen Ausdehnung in die Richtung von vorne nach hinten) mindestens 5 cm und/oder höchstens 25 cm oder höchstens 15 cm.

Eine (maximale) Querausdehnung (senkrecht auf die Richtung von vorne nach hinten) des Kopfaufprallabschnittes kann ebenfalls mindestens 5 cm oder mindestens 10 cm und/oder höchstens 25 cm, vorzugsweise höchstens 15 cm betragen. Der Rücksprung bzw. der vergleichsweise weiche Abschnitt kann vollständig innerhalb eines so definierten Kopfaufprallabschnittes liegen oder über diesen auch hinausgehen (vorzugsweise jedoch nicht um mehr als 5 cm). Alternativ oder zusätzlich kann auch die (gesamte) Oberseite des Fangkörpers als Kopfaufprallabschnitt angesehen werden.

Ein Oberflächenabschnitt soll dann als weicher gegenüber einem anderen Oberflächenabschnitt verstanden werden, wenn er einem Aufprall des Kopfes des Kindes einen geringeren Widerstand entgegensetzt. Beispielsweise kann ein kugelförmiger Probekörper den weicheren Oberflächenabschnitt (wenn dieser Oberflächenabschnitt horizontal ausgerichtet wird und der Probekörper auf diesem aufliegt) tiefer (weiter) eindrücken als bei dem Vergleichs-Oberflächenabschnitt (auf den Bezug genommen wird). Eine solche Probekugel kann beispielsweise ein Gewicht von 2 kg und/oder einen Durchmesser von 10 cm aufweisen oder in Form (oder zumindest Durchmesser) und Gewicht dem Kopf eines der oben genannten Dummys entsprechen. Sollte eine gegebene Struktur eines Fangkörpers eine solche Messung nicht ermöglichen, kann zunächst festgelegt (bzw. geprüft) werden, aus welchem Material der jeweilige Abschnitt ausgebildet ist. Dann kann ein Probekörper gebildet werden, der ausreichend breit, lang und tief ist (beispielsweise mindestens 30 cm breit und lang, sowie 10 cm tief), um die oben erläuterte Messung durchführen zu können. Bei einer elastischen Verformbarkeit der jeweils zu vergleichenden Oberflächenabschnitte soll derjenige Oberflächenabschnitt als weicher verstanden werden, der einen geringeren E-Modul (insbesondere bei 20°, zumindest in eine Richtung senkrecht zur jeweiligen Oberfläche) aufweist, der vorzugsweise höchstens 0,8-mal, noch weiter vorzugsweise höchstens 0,5-mal demjenigen E-Modul entspricht (bzw. dessen Vergleichsabschnitts). Wenn der jeweilige Oberflächenabschnitt aus mehreren Materialien besteht, soll diese vorzugsweise für zumindest diejenigen Materialen gelten, die sich unmittelbar an die jeweilige Oberfläche anschließen. Ein eventueller Bezug oder eine sonstige (vergleichsweise dünne, ggf. forminstabile oder formstabile) Abdeckung soll dabei vorzugsweise unberücksichtigt bleiben, kann jedoch auch (gerade wenn eine solche Abdeckung auch den Rücksprung mit ausbildet bzw. nachvollzieht und/oder zu einer vergleichsweise weichen Ausbildung wesentlich beiträgt) berücksichtigt werden.

Erfindungsgemäß ist der Rücksprung auch (zumindest teilweise, ggf. vollständig) mittels einer Abdeckung abgedeckt. Die Abdeckung weist vorzugsweise eine Dicke von mindestens 0,1 mm, ggf. mindestens 1 mm und/oder höchstens 5 cm, vorzugsweise höchstens 3 cm oder höchstens 1 cm auf.

Mindestens ein (bzw. der mindestens eine) zweite(r) Oberflächenabschnitt kann zumindest abschnittsweise einen an den Kopfaufprallabschnitt angrenzenden Oberflächenabschnitt aufweisen. Derselbe zweite Oberflächenabschnitt oder mindestens ein weiterer zweiter Oberflächenabschnitt kann (alternativ oder zusätzlich) zumindest abschnittsweise einen Innenseiten-Oberflächenabschnitt aufweisen, der an einer Innenseite des Fangkörpers angeordnet ist.

In Ausführungsformen kann der zweite Oberflächenabschnitt zumindest die gesamte Innenseite, ggf. auch die (gesamte) Unterseite, des Fangkörpers umfassen (bzw. deren Oberfläche). Alternativ oder zusätzlich kann der zweite Oberflächenabschnitt so ausgebildet sein, dass er eine Gurtführung für den Fahrzeuggurt und/oder Anschlussteile und/oder Befestigungsmittel ausbildende Abschnitte des Fangkörpers nicht umfasst.

Grundsätzlich kann der Kopfaufprallabschnitt bzw. erste Oberflächenabschnitt weicher ausgebildet sein als sämtliche weitere Oberflächenabschnitte des Fangkörpers (oder zumindest weicher als sämtliche Oberflächenabschnitte einer Innenseite und/oder Außenseite und/oder Unterseite und/oder linken Seite und/oder rechten Seite). Ausführungsgemäß kann jedoch insbesondere ein zum Abdomen des Kindes gerichteter Abschnitt der Innenseite ebenfalls weich ausgestaltet sein.

Der Kopfaufprallabschnitt kann zumindest abschnittsweise (ggf. vollständig) aus einem ersten Material ausgebildet sein. Der mindestens eine zweite (bzw. einer von ggf. mehreren zweiten) Oberflächenabschnitt(en) kann zumindest abschnittsweise aus einem zweiten Material ausgebildet sein. Insoweit Kopfaufprallabschnitt und/oder der zweite Oberflächenabschnitt mehr als nur ein Material umfassen, soll als erstes bzw. zweites Material insbesondere dasjenige Material verstanden werden, das mindestens 20 % oder mindestens 50 % oder mindestens 80 % der Oberfläche ausmacht, die der Oberflächenabschnitt ausbildet. In Ausführungsformen unterscheiden sich erstes und zweites Material vorzugsweise.

Das erste Material kann einen niedrigeren E-Modul als das zweite Material (beispielsweise einen E-Modul, der höchstens 0,8-mal, vorzugsweise höchstens 0,5-mal, ggf. höchstens 0,2-mal so groß ist wie der E-Modul des zweiten Materials) aufweisen.

Alternativ oder zusätzlich kann das erste Material eine höhere Porosität aufweisen als das zweite Material. Die Porosität des ersten Materials kann mindestens 1,2-mal, vorzugsweise mindestens 1,5-mal, noch weiter vorzugsweise mindestens 2-mal so groß sein wie eine Porosität des zweiten Materials. In einigen Ausführungsformen ist das zweite Material un-porös (weist also zumindest im Wesentlichen keine Poren auf).

Alternativ oder zusätzlich kann das erste Material eine andere chemische Zusammensetzung aufweisen als das zweite Material (beispielsweise aus einem anderen Kunststoff bestehen).

Alternativ oder zusätzlich kann das erste Material eine geringere Dichte aufweisen als das zweite Material.

Bei dem ersten Material kann es sich um einen Schaumstoff bzw. ein aufgeschäumtes Material und/oder bei dem zweiten Material um ein dichtes bzw. nicht-aufgeschäumtes Material handeln. Auch bei dem zweiten Material kann es sich um ein aufgeschäumtes Material handeln, z. B. einen Partikelschaumstoff.

Insoweit der Rücksprung durch eine Abdeckung (zumindest teilweise) abgedeckt ist, kann diese integral ausgeformt sein (insbesondere im selben Prozess, wie der umgebende Abschnitt, der auch den Rücksprung selbst ausbildet). Die Abdeckung kann auch (zumindest teilweise) nachträglich aufgebracht sein, insbesondere befestigt sein, beispielsweise aufgeklebt sein. Ein dadurch erzielter Hohlraum (bzw. allgemein eine Tiefe des Rücksprungs) kann vorzugsweise mindestens 2 cm, ggf. zumindest 3 cm oder 5 cm tief sein. Alternativ oder zusätzlich kann die Abdeckung vorzugsweise höchstens 5 cm dick sein, vorzugsweise höchstens 2 cm oder höchstens 1 cm.

Der Rücksprung kann eine Tiefe von mindestens 2 cm, vorzugsweise mindestens 3 cm oder mindestens 5 cm und/oder höchstens 10 cm aufweisen.

Der Rücksprung kann durch eine Ausnehmung ausgebildet sein, die (abgesehen von der Abdeckung) nach oben offen ist und seitlich (insbesondere nach rechts und links) geschlossen.

Der Rücksprung kann in alternativen Ausführungsformen durch eine Ausnehmung ausgebildet sein, die (abgesehen von einer optionalen Abdeckung) nach oben und an mindestens (oder genau) einer oder mindestens (oder genau) zwei, insbesondere gegenüberliegenden Seiten, vorzugsweise einer linken und einer rechten Seite, offen ist (und insbesondere nach unten, ggf. an der/den übrigen Seite/n geschlossen). Eine derartige Ausnehmung kann auch als (zur Seite hin) offener Kanal bzw. als eine (ggf. abgerundete) Stufe ausgebildet sein. Insbesondere kann eine solche Ausnehmung in einer (senkrechten) Seitenansicht (von links und/oder rechts) einsehbar sein.

Der Rücksprung kann in zumindest einer Richtung eine konstante Tiefe aufweisen (beispielsweise in die Querrichtung von rechts nach links bzw. umgekehrt). Mit der Angabe "rechts" ist immer eine Seite zu verstehen, zu der die rechte Schulter des Kindes benachbart ist (Entsprechendes gilt für die linke Seite).

Insgesamt kann/können (im Kopfaufprallabschnitt) mindestens (oder genau) ein Rücksprung oder mindestens (oder genau) zwei Rücksprünge oder drei oder mehr Rücksprünge ausgebildet sein (die beispielsweise durch Stege voneinander getrennt sind).

Insgesamt kann/können (im Kopfaufprallabschnitt) mindestens (oder genau) ein weicherer Abschnitt oder mindestens (oder genau) zwei weichere Abschnitte oder drei oder mehr weichere Abschnitte ausgebildet sein (die beispielsweise durch Stege bzw. weniger weiche Bereiche voneinander getrennt sind).

Der mindestens eine Rücksprung (ggf. mehrere oder alle Rücksprünge in ihrer Gesamtheit) und/oder der mindestens eine weichere Abschnitt (ggf. mehrere oder alle weichere Abschnitte in Ihrer Gesamtheit) kann/können sich über eine Fläche von mindestens 10 cm², vorzugsweise mindestens 30 cm² und/oder höchstens 400 cm², vorzugsweise 250 cm² erstrecken.

Der (jeweilige) Rücksprung und/oder der (jeweilige) weichere Abschnitt kann einen Abstand von mindestens 2 cm und/oder höchstens 10 cm von einem oberen Rand einer Innenseite des Fangkörpers und/oder einem hinteren Rand einer Oberseite des Fangkörpers aufweisen. Alternativ oder zusätzlich kann der (jeweilige) Rücksprung und/oder der (jeweilige) weichere Abschnitt einen Abstand von mindestens 2 cm und/oder höchstens 10 cm von einem vorderen Rand einer (der) Oberseite aufweisen.

Gemäß einem optionalen Aspekt der Erfindung wird die Aufgabe insbesondere durch einen Fangkörper der obigen Art für einen Kindersitz zur Anbringung auf einem Kraftfahrzeugsitz gelöst, wobei der Kindersitz einen Hauptkörper zur Aufnahme eines Kindes aufweist, wobei eine Oberseite des Fangkörpers in mindestens einem Gebrauchszustand nach vorne zumindest abschnittsweise abfällt, wobei ein Winkel gegenüber der Horizontalen und/oder einer Unterseite des Fangkörpers vorzugsweise zumindest abschnittsweise größer als 20° ist, vorzugsweise größer als 30° ist, ggf. größer als 40° ist. Alternativ oder zusätzlich liegt mindestens ein hinterer Punkt der Oberseite des Fangkörpers um mindestens 20 %, vorzugsweise mindestens 30 % oder mindestens 50 %, einer Höhe (vertikalen Erstreckung) des Fangkörpers oberhalb eines Niveaus mindestens eines in Bezug auf den hinteren Punkt vorderen Punktes der Oberseite liegt. Die jeweils zu betrachtenden Punkte liegen vorzugsweise in derselben vertikalen, in die Vorwärtsrichtung ausgerichteten Ebene (= Vertikal-Vorwärts-Ebene), weiter vorzugsweise in einer in Bezug auf den Fangkörper zentralen Vertikal-Vorwärts-Ebene. Der hintere Punkt liegt vorzugsweise in einer hintere Hälfte (insbesondere hinterem Drittel) des Fangkörpers und/oder der vordere Punkt in einer vorderen Hälfte (insbesondere vorderen Drittel) oder einem mittleren Drittel. Die Angaben des vorangehenden Satzes beziehen sich insbesondere auf eine Erstreckung des Fangkörpers in die Vorwärtsrichtung. Beispielsweise soll ein Punkt dann in einer hinteren Hälfte angeordnet sein, wenn er sich in einer Projektion auf die horizontale Ebene hinter einem Mittelpunkt bzw. hinter einer (sich seitwärts erstreckenden) Mittellinie des auf dieselbe horizontale Ebene projizierten Fangkörpers befindet. Eventuelle kleinere Löcher oder Ausnehmungen, beispielsweise zu Befestigungszwecken, sollen bei dieser Betrachtung vorzugsweise unberücksichtigt bleiben (beispielsweise wenn diese Löcher bzw. Ausnehmungen einen Querschnitt - insbesondere quer zu einer Tiefenerstreckung - von kleiner als 5 cm² oder kleiner als 2 cm² aufweisen). Die Aspekte dieses Absatzes können auch besonders bevorzugt mit einem oder mehreren der beiliegenden Ansprüche kombiniert werden (wobei die Merkmale des Anspruchs 1 nicht realisiert sein müssen, aber realisiert sein können).

Ein Kerngedanke dieses weiteren Erfindungsaspektes liegt darin, abweichend von bekannten Formen einen Fangkörper bereitzustellen, der vergleichsweise steil abfällt. Auch dadurch wird erreicht, dass der Kopf des Kindes (zumindest in einer vergleichsweise späten Phase des Unfalls) nicht so aufprallt, dass Verletzungen resultieren (bzw. zumindest eine Wahrscheinlichkeit dafür verringert wird).

Insoweit ein Winkel gegenüber einer Unterseite des Fangkörpers definiert wird und diese Unterseite nicht gerade sein sollte, soll eine Ebene herangezogen werden, die sich ergibt, wenn der Fangkörper mit seiner Unterseite auf eine ebene Bodenfläche gelegt wird. Die jeweilige Winkelangabe wird zumindest von 20 Flächen-%, weiter vorzugsweise mindestens 50 Flächen-%, ggf. mindestens 80 Flächen-% erfüllt. In Ausführungsformen kann der jeweilige Winkel sogar größer als 50° oder sogar größer als 60° sein.

Wenn eine Oberseite des Fangkörpers in mindestens einem Gebrauchszustand nach vorne zumindest abschnittsweise abfällt, kann ein Winkel gegenüber der Horizontalen und/oder einer Unterseite des Fangkörpers zumindest abschnittsweise (insbesondere in den Abschnitten, die die obige Vorgabe einer Untergrenze erfüllen) kleiner als 85°, vorzugsweise kleiner als 80° oder ggf. kleiner als 70° oder sogar kleiner als 60° sein.

Die obengenannte Aufgabe wird weiterhin gelöst durch einen Kindersitz, umfassend einen Fangkörper nach Anspruch 1 und mindestens einem der obigen Aspekte.

Eine Oberseite des Fangkörpers kann in mindestens einem Gebrauchszustand nach vorne zumindest abschnittsweise abfallen, wobei ein Winkel gegenüber der Horizontalen und/oder einer Unterseite des Fangkörpers vorzugweise zumindest abschnittsweise größer als 20° ist, weiter vorzugsweise größer als 30° ist, ggf. größer als 40° ist oder sogar größer als 50° ist und/oder kleiner als 85° ist, vorzugsweise kleiner als 80° ist, ggf. kleiner als 70° ist oder sogar kleiner als 60° ist.

Mindestens ein hinterer Punkt der Oberseite des Fangkörpers kann um mindestens 20 %, vorzugsweise mindestens 30 % oder mindestens 50 %, einer Höhe des Fangkörpers oberhalb eines Niveaus mindestens eines in Bezug auf den hinteren Punkt vorderen Punkt des Fangkörpers liegen.

Der Kopfaufprallabschnitt ist insbesondere (vollständig) in einem mittleren Abschnitt des Fangkörpers angeordnet, der nicht Bestandteil der Innenseite oder Unterseite des Fangkörpers ist (bzw. die Innenseite/Unterseite ausbildet). Vorzugsweise ist der Kopfaufprallabschnitt Bestandteil der Oberseite des Fangkörpers (oder wird durch diese definiert). Gegebenenfalls kann die gesamte Oberseite des Fangkörpers als Kopfaufprallfläche verstanden werden.

Die Oberseite des Fangkörpers ist vorzugsweise vorgesehen und ausgebildet, um bei einem Frontal-Aufprall vom Kopf des Kindes kontaktiert zu werden und/oder diesen aufzufangen. Insbesondere kann ein der Innenseite des Fangkörpers am nächsten gelegener Rand des Kopfaufprallabschnittes (in Fahrtrichtung betrachtet) einen Abstand von höchstens 10 cm, weiter vorzugsweise höchstens 7 cm oder höchstens 5 cm von der Innenseite aufweisen.

Gemäß einem Erfindungsaspekt kann der Fangkörper einen ersten Abschnitt aufweisen, der eine erste Seite des Fangkörpers ausbildet, wobei der erste Abschnitt einen geringen Anteil (insbesondere senkrecht) einwirkender Kräfte aufnimmt als ein zweiter Abschnitt des Körpers, wobei der zweite Abschnitt zum ersten Abschnitt vorzugsweise benachbart ist und/oder wobei der zweite Abschnitt vorzugsweise zumindest Teile der Innenseite des Fangkörpers ausbildet.

Der erste Abschnitt kann Bestandteil einer Oberseite des Fangkörpers sein oder diese ausbilden.

Der erste Abschnitt kann weicher als der zweite Abschnitt des Fangkörpers ausgebildet sein.

Ein oberer Rand der Innenseite kann (zumindest in zumindest einem Gebrauchszustand) um mindestens 3 cm, vorzugsweise mindestens 5 cm, noch weiter vorzugsweise mindestens 10 cm, ggf. 15 cm und/oder höchstens 20 cm höher liegen als ein oberer Rand einer Außenseite.

Der Fangkörper kann an seiner Oberseite (ganz oder zumindest im Bereich des Kopfaufprallabschnitts) einen schmalen an die Innenseite anschließenden hinteren Abschnitt aufweisen (wobei schmal sich insbesondere auf eine Ausdehnung in Fahrtrichtung bezieht und/oder wobei schmal vorzugsweise kleiner als 10 cm, insbesondere kleiner als 7 cm, beispielsweise 3-5 cm bedeuten kann), und einen weiter von der Innenseite entfernten vorderen Teil aufweist, wobei der vordere Teil gegenüber dem hinteren Teil nach unten versetzt ist, vorzugsweise um zumindest 2 cm (ggf. um zumindest 3 cm oder 5 cm).

Der Rücksprung kann in einer Draufsicht eine vieleckige, beispielsweise viereckige (konkret rechteckförmige oder trapezförmige) Form aufweisen. Weiterhin kann der Rücksprung (in einer Draufsicht) eine Kreissektor-Form aufweisen, wobei ein Scheitelpunkt des Kreissektors vorzugsweise der hinterste Punkt ist. Dadurch kann besonders effektiv die Sicherheit für das Kind verbessert werden. Alternativ kann der Rücksprung in Draufsicht eine ovale (insbesondere elliptische oder runde) Form aufweisen.

Wenn es im vorliegenden Zusammenhang um eine Gebrauchsstellung bzw. um einen Gebrauchszustand des Fangkörpers (insbesondere in Bezug auf evtl. definierte Winkel) ankommt, soll die jeweilige Vorgabe insbesondere für mindestens einen möglichen Gebrauchszustand erfüllt sein, falls mehrere Gebrauchszustände eingestellt werden können (beispielsweise wenn der Fangkörper und/oder ein Teil des Kindersitzes, auf dem der Fangkörper montiert ist, hinsichtlich seiner Winkellage verändert werden kann), vorzugsweise für mindestens den halben insgesamt einstellbaren Winkelbereich (in Bezug auf die Orientierung des Fangkörpers gegenüber der Horizontalen). Ausgangspunkt ist vorzugsweise der Fangkörper bzw. Kindersitz in einem Zustand, in dem der Kindersitz auf einer horizontalen ebenen Fläche abgestellt ist.

Weitere Ausführungsformen ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine erste Ausführungsform eines erfindungsgemäßen Fangkörpers in einer Schrägansicht;
- Fig. 2: eine weitere Ausführungsform eines erfindungsgemäßen Fangkörpers in einer Seitenansicht;
- Fig. 3: eine Ausführungsform analog Fig. 1 mit schematisch skizzierter Kopfaufprallfläche;
- Fig. 4: eine Seitenansicht einer weiteren Ausführungsform eines erfindungsgemäßen Fangkörpers;
- Fig. 5: eine Schrägansicht eines weiteren erfindungsgemäßen Fangkörpers;
- Fig. 6: eine Explosionsansicht des Fangkörpers gemäß Fig. 5;
- Fig. 7: eine weitere Ausführungsform eines erfindungsgemäßen Fangkörpers in einer Schrägansicht;
- Fig. 8: eine weitere Ausführungsform eines erfindungsgemäßen Fangkörpers in einer Schrägansicht;
- Fig. 9: den Fangkörper gemäß Fig. 2 in einer Ansicht von vorne;
- Fig. 10: einen erfindungsgemäßen Kindersitz; und
- Fig. 11: eine weitere Ausführungsform eines erfindungsgemäßen Kindersitzes.

In der nachfolgenden Beschreibung werden für gleiche und gleich wirkende Teile dieselben Bezugsziffern verwendet.

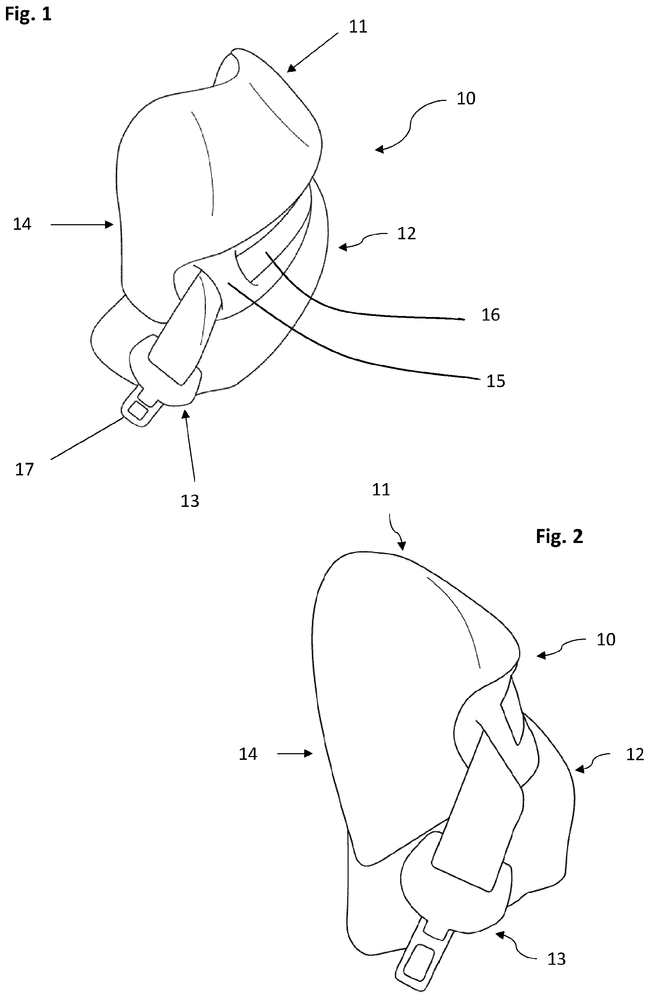

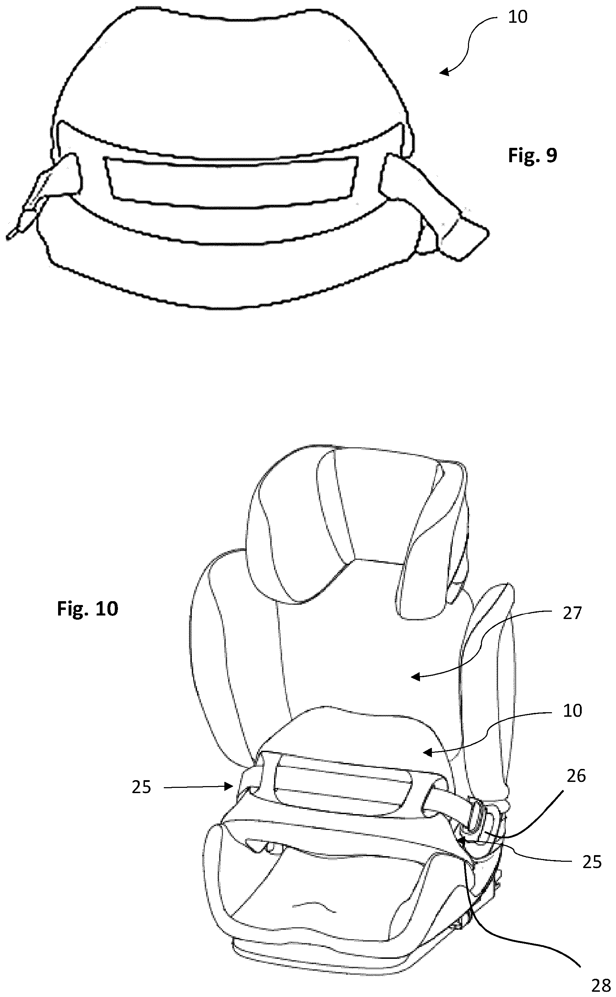

Fig. 1 zeigt einen Fangkörper 10 mit einer Oberseite 11, einer Außenseite 12 einer Unterseite 13 sowie einer Innenseite 14. Auf der Außenseite 12 ist mindestens eine Gurtführungseinrichtung 15 (konkret in Form einer Öse bzw. Lasche) ausgebildet, über die ein Gurtabschnitt 16 geführt bzw. gehalten werden kann. Der Gurtabschnitt 16 ist wiederum über ein Befestigungsmittel 17 (z. B. Gurtzunge) an einem (hier nicht gezeigten) Hauptkörper eines Kindersitzes befestigbar (siehe auch Fig. 10). Konkret kann der Gurtabschnitt 16 (zumindest im Wesentlichen) quer über den Fangkörper geführt sein.

Der Fangkörper gemäß Fig. 1 weist eine vergleichsweise steile Oberseite 11 auf.

Die Oberseite 11 hat konkret einen Winkel von über 45° gegenüber einer Horizontalen (im montierten Zustand des Fangkörpers, vgl. Fig. 10).

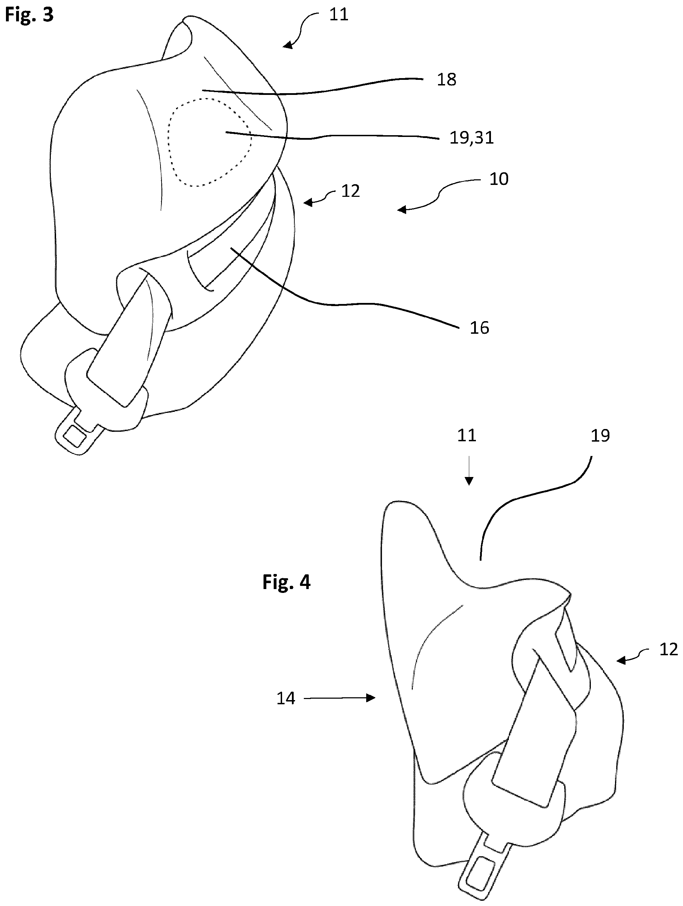

Die in Fig. 1 gezeigte Ausführungsform weist einen Rücksprung auf und kann einen weicheren Abschnitt (wie nachfolgend beispielsweise in Bezug auf Fig. 3 erläutert) aufweisen.

Fig. 2 zeigt eine Seitenansicht einer weiteren Ausführungsform eines erfindungsgemäßen Fangkörpers. Hier fällt (im Unterschied zu Fig. 1) die Oberseite 11 etwas weniger steil ab. Erfindungsgemäß ist hier ein Rücksprung vorgesehen, vorzugsweise kann ein weicherer Abschnitt, wie beispielsweise im Zusammenhang mit Fig. 3 erläutert, vorgesehen sein.

Fig. 3 zeigt eine Schrägansicht eines erfindungsgemäßen Fangkörpers. In einem Kopfaufprallabschnitt 18 ist mindestens ein Rücksprung 19 und/oder mindestens ein weicherer Abschnitt 31 ausgebildet (dessen Umriss gestrichelt gezeichnet ist).

Der weichere Abschnitt ist vorzugsweise weicher als mindestens ein Abschnitt, der außerhalb an den gestrichelten Bereich angrenzt. Ggf. kann die gesamte Oberseite weicher ausgebildet sein (zumindest im Vergleich zu einer Innenseite). Dieser Kopfaufprallabschnitt 18 kann gänzlich (oder zumindest teilweise, beispielsweise zu mindestens 50 Flächen-% bezogen auf eine Draufsicht oder zu mindestens 80 Flächen-% bezogen auf eine Draufsicht) durch einen oder mehrere Rücksprung/Rücksprünge und/oder einen oder mehrere weichere Abschnitt/e ausgebildet werden.

Fig. 4 zeigt eine weitere Ausführungsform eines erfindungsgemäßen Fangkörpers in Seitenansicht. Hier ist ein Rücksprung 19 ausgebildet, der nach oben und zu den beiden Seiten hin (also nach links und rechts) offen ist bzw. als (abgerundete) Stufe ausgeformt ist. Konkret ist die Oberseite 11 (von ihrem höchsten Punkt in Gebrauchsstellung ausgehend) zunächst (über einen vergleichsweise kurzen Abschnitt) nur leicht abfallend ausgebildet, weist dann einen Abschnitt mit starkem Abfall auf (mit einem Winkel von größer als 60°, oder ggf. sogar größer als 70° gegenüber der Horizontalen), um dann wieder weniger stark abzufallen bis sogar wieder (optional) ein (allerdings eher geringer) Anstieg erfolgt mit einem Winkel zwischen 10 und 40° gegenüber der Horizontalen. In einem Endabschnitt bzw. vordersten Abschnitt der Oberseite dreht sich der Winkel (optional) wieder um bzw. die Oberseite fällt wieder ab.

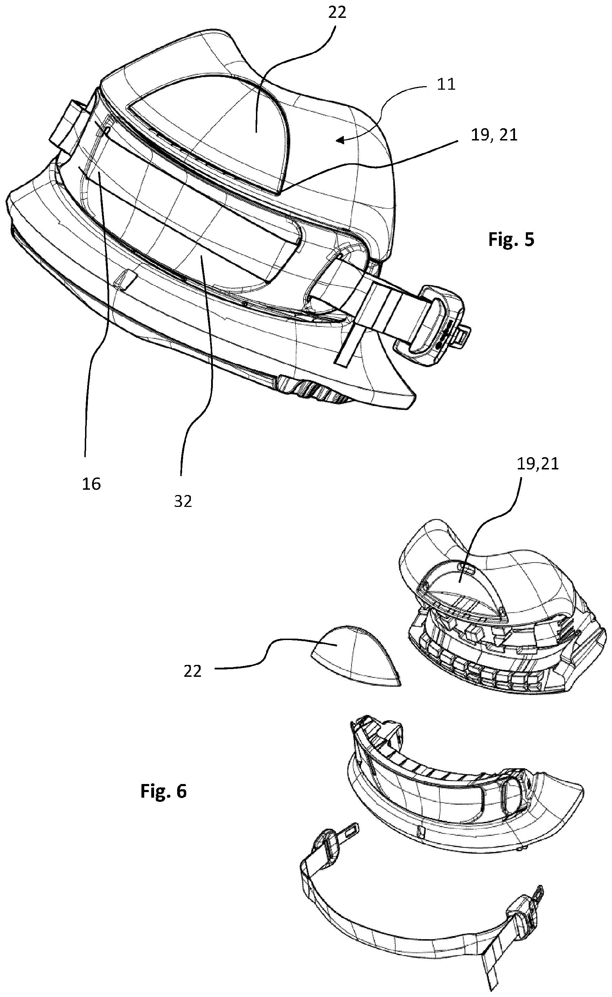

Fig. 5 zeigt eine konkrete Ausführungsform eines erfindungsgemäßen Fangkörpers in einer Schrägansicht.

Der Fangkörper umfasst einen Hauptkörper (vorzugsweise aus EPP) mit einem Hohlraum 21, der durch eine Abdeckung 22 (beispielsweise aus EPP) abgedeckt ist. Auch dieser Hohlraum bildet einen entsprechenden Rücksprung 19 aus (der hier abgedeckt ist). Weiterhin weist der Fangkörper gemäß Fig. 5 und 6 eine Gurtführung 32 aus Hartplastik auf sowie einen Gurt(-abschnitt) 16. Fig. 6 zeigt den Fangkörper gemäß Fig. 5 in einer Explosionsdarstellung.

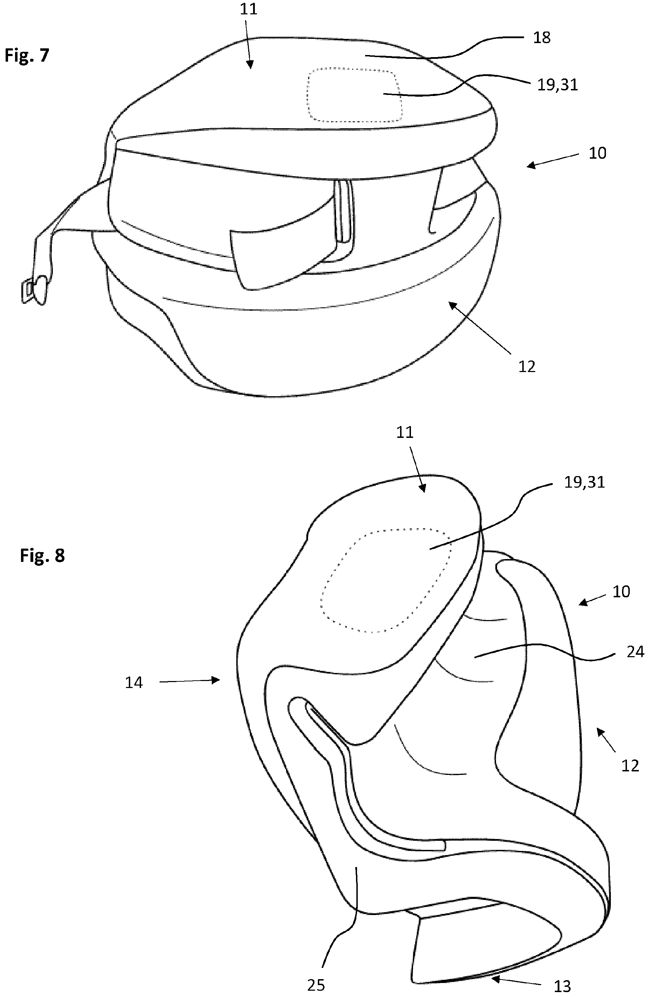

In der Ausführungsform nach Fig. 7 ist eine Oberseite 11 des Fangkörpers nur leicht abfallend ausgebildet. In einem Kopfaufprallabschnitt 18 ist ein Rücksprung 19 angeordnet, vorzugsweise kann ein weichere Abschnitt 31 in diesem Kopfaufprallabschnitt 18 angeordnet sein, wie gestrichelt angedeutet. Diese können beispielsweise wie im Zusammenhang mit Fig. 3 erläutert ausgebildet sein.

Fig. 8 zeigt eine Schrägdarstellung einer weiteren Ausführungsform des Fangkörpers. Auch hier ist ein Kopfaufprallabschnitt 18 schematisch dargestellt. Auch dieser kann grundsätzlich wie im Zusammenhang mit Fig. 3 erläutert ausgebildet sein. Die Oberseite 11 ist hier (zumindest annähernd) horizontal ausgebildet. Der Fangkörper kann eine Gurtführung 24 für einen (nicht gezeigten) Fahrzeuggurt aufweisen, durch den der Hauptkörper zusammen mit dem Fangkörper am Fahrzeugsitz gehalten werden kann. Weiterhin können seitliche Abschnitte 25 des Fangkörpers zum formschlüssigen Eingriff in Seitenteile (in Hörnchen-Form) des Hauptkörpers ausgebildet sein.

Fig. 9 zeigt eine Ansicht des Fangkörpers gemäß Fig. 2 von vorne, wobei hier der Kopfaufprallabschnitt nicht explizit dargestellt ist.

Fig. 10 zeigt einen erfindungsgemäßen Kindersitz mit Fangkörper 10. Der Fangkörper 10 ist hier über einen Befestigungsgurt 26 an einem Hauptkörper 27 des Kindersitzes befestigt und gegenüber einer (jeweiligen bzw. rechts sowie links angeordneten) Abstützfläche 28 auf diesem abgestützt (und zwar an den entsprechenden seitlichen Abschnitten 25).

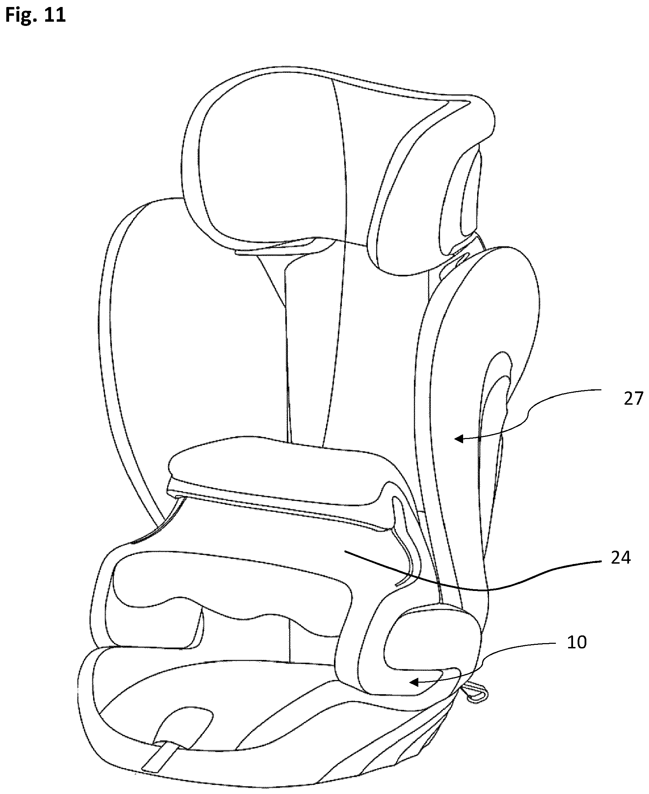

Fig. 11 zeigt einen erfindungsgemäßen Kindersitz mit Fangkörper 10. Der Fangkörper 10 ist hier zur Befestigung mit einem nicht dargestellten Fahrzeuggurt an einem Hauptkörper 27 des Kindersitzes ausgebildet und weist hierfür eine Gurtführung 24 auf. Die seitlichen Abschnitte des Fangkörpers sind im formschlüssigen Eingriff mit Hörnchen des Hauptkörpers des Kindersitzes.

### Bezugszeichen

- 10: Fangkörper
- 11: Oberseite
- 12: Außenseite
- 13: Unterseite
- 14: Innenseite
- 15: Gurtführungseinrichtung
- 16: Gurtabschnitt
- 17: Befestigungsmittel
- 18: Kopfaufprallabschnitt
- 19: Rücksprung
- 21: Hohlraum
- 22: Abdeckung
- 24: Gurtführung
- 25: seitlicher Abschnitt
- 26: Befestigungsgurt
- 27: Hauptkörper
- 28: Abstützfläche
- 31: weicherer Abschnitt
- 32: Gurtführung

## Patentansprüche

1. Fangkörper (10) für einen Kindersitz zur Anbringung auf einen Kraftfahrzeugsitz, wobei der Kindersitz einen Hauptkörper zur Aufnahme eines Kindes aufweist, wobei der Fangkörper (10) einen ersten Oberflächenabschnitt, nämlich einen Kopfaufprallabschnitt (18) aufweist, auf den im Falle einer plötzlichen Verzögerung der Kopf des Kindes aufprallt, wobei der Kopfaufprallabschnitt (18) mindestens einen Rücksprung (19) aufweist,
**dadurch gekennzeichnet, dass**
der Rücksprung (19) mittels einer Abdeckung abgedeckt ist.

2. Fangkörper (10) nach Anspruch 1,
**dadurch gekennzeichnet, dass** der Kopfaufprallabschnitt zumindest teilweise weicher ausgebildet ist als mindestens ein zweiter Oberflächenabschnitt des Fangkörpers (10).

3. Fangkörper (10) nach Anspruch 1,
wobei die Abdeckung vorzugsweise eine Dicke von mindestens 0,1 mm oder mindestens 1 mm und/oder höchstens 5 cm, vorzugsweise höchstens 3 cm oder höchstens 1 cm aufweist.

4. Fangkörper (10) nach Anspruch 2,
**dadurch gekennzeichnet, dass**
der zweite Oberflächenabschnitt zumindest abschnittsweise einen an den Kopfaufprallabschnitt (18) angrenzenden Oberflächenabschnitt und/oder zumindest abschnittsweise einen Innenseiten-Oberflächenabschnitt aufweist, der an einer Innenseite des Fangkörpers (10) angeordnet ist.

5. Fangkörper (10) nach Anspruch 2,
**dadurch gekennzeichnet, dass**
der Kopfaufprallabschnitt (18) zumindest abschnittsweise aus einem ersten Material ausgebildet ist und der zweite Oberflächenabschnitt zumindest abschnittsweise aus einem zweiten Material ausgebildet ist, wobei sich erstes und zweites Material vorzugsweise unterscheiden, vorzugsweise dadurch, dass das erste Material einen niedrigeren E-Modul aufweist als das zweiter Material und/oder dadurch, dass das erste Material eine höhere Porosität aufweist als das zweite Material und/oder durch eine chemische Zusammensetzung.

6. Fangkörper (10) nach einem der vorhergehenden Ansprüche,
**dadurch gekennzeichnet, dass**
der Rücksprung (19) eine Tiefe von mindestens 2 cm, vorzugsweise mindestens 3 cm oder mindestens 5 cm, und/oder höchstens 10 cm aufweist.

7. Fangkörper (10) nach einem der vorhergehenden Ansprüche,
**dadurch gekennzeichnet, dass**
der Rücksprung (19) durch eine Ausnehmung ausgebildet ist, die, abgesehen von der Abdeckung, nach oben offen ist und seitlich geschlossen.

8. Fangkörper (10) nach einem der vorhergehenden Ansprüche,
**dadurch gekennzeichnet, dass**
der Rücksprung (19) durch eine Ausnehmung ausgebildet wird, die, abgesehen von der Abdeckung, nach oben und an mindestens einer oder mindestens zwei, insbesondere gegenüberliegenden Seiten, vorzugsweise einer linken und einer rechten Seite, offen ist und an der/den übrigen Seite/n geschlossen.

9. Fangkörper (10) nach einem der vorhergehenden Ansprüche,
**dadurch gekennzeichnet, dass**
der Rücksprung (19) und/oder der weichere Abschnitt sich über eine Fläche von mindestens 10 cm², vorzugsweise mindestens 30 cm² und/oder höchstens 400 cm², vorzugsweise höchstens 250 cm², erstreckt/erstrecken.

10. Fangkörper (10) nach einem der vorhergehenden Ansprüche,
**dadurch gekennzeichnet, dass**
der Rücksprung (19) und/oder der weichere Abschnitt einen Abstand von mindestens 2 cm und/oder höchstens 10 cm von einem oberen Rand einer Innenseite des Fangkörpers (10) und/oder einem hinteren Rand einer Oberseite (11) des Fangkörpers (10) aufweist/aufweisen und/oder einen Abstand von mindestens 2 cm und/oder höchstens 10 cm von einem vorderen Rand einer/der Oberseite (11) aufweist/aufweisen.

11. Fangkörper (10) nach einem der vorhergehenden Ansprüche,
**dadurch gekennzeichnet, dass**
eine Oberseite (11) des Fangkörpers (10) in mindestens einem Gebrauchszustand nach vorne zumindest abschnittsweise abfällt, wobei ein Winkel gegenüber der Horizontalen und/oder einer Unterseite (13) des Fangkörpers (10) vorzugsweise zumindest abschnittsweise größer als 20° ist, weiter vorzugsweise größer als 30° ist, ggf. größer als 40° ist und/oder **dadurch gekennzeichnet, dass** mindestens ein hinterer Punkt der Oberseite des Fangkörpers um mindestens 20 %, vorzugsweise mindestens 30 % oder mindestens 50 %, einer Höhe des Fangkörpers oberhalb eines Niveaus mindestens eines in Bezug auf den hinteren Punkt vorderen Punkt der Oberseite liegt.

12. Fangkörper (10) nach einem der vorhergehenden Ansprüche,
**dadurch gekennzeichnet, dass**
eine Oberseite (11) des Fangkörpers (10) in mindestens einem Gebrauchszustand nach vorne zumindest abschnittsweise abfällt, wobei ein Winkel gegenüber der Horizontalen und/oder einer Unterseite (13) des Fangkörpers (10) vorzugsweise zumindest abschnittsweise kleiner als 80° ist
und/oder
**dadurch gekennzeichnet, dass** kein hinterer Punkt der Oberseite des Fangkörpers existiert, der um mehr als 80 % oder mehr als 70 % einer Höhe des Fangkörpers oberhalb eines Niveaus sämtlicher in Bezug auf den hinteren Punkt vorderen Punkte des der Oberseite liegt.

13. Kindersitz, umfassend einen Fangkörper (10) nach einem der vorhergehenden Ansprüche.

14. Kindersitz nach Anspruch 13,
**dadurch gekennzeichnet, dass**
eine Oberseite (11) des Fangkörpers (10) in mindestens einem Gebrauchszustand nach vorne zumindest abschnittsweise abfällt, wobei ein Winkel gegenüber der Horizontalen und/oder einer Unterseite (13) des Fangkörpers (10) vorzugsweise zumindest abschnittsweise größer als 20° ist, weiter vorzugsweise größer als 30° ist, ggf. größer als 40° ist und/oder kleiner als 80°
und/oder
**dadurch gekennzeichnet, dass** mindestens ein hinterer Punkt der Oberseite des Fangkörpers um mindestens 20 %, vorzugsweise mindestens 30 % oder mindestens 50 %, einer Höhe des Fangkörpers oberhalb eines Niveaus mindestens eines in Bezug auf den hinteren Punkt vorderen Punkt des Fangkörpers liegt.

## Claims

1. An impact shield (10) for a child seat to be attached to a motor vehicle seat, wherein the child seat has a main body for accommodating a child, wherein the impact shield (10) has a first surface section, namely a head impact section (18), on which the head of the child impacts in case of a sudden deceleration, wherein the head impact section (18) has at least one setback (19),
**characterized in that**
the setback (19) is covered by means of a cover.

2. The impact shield (10) as claimed in claim 1,
**characterized in that** the head impact section is at least partially formed softer than at least one second surface section of the impact shield (10).

3. The impact shield (10) as claimed in claim 1,
wherein the cover preferably has a thickness of at least 0.1 mm or at least 1 mm and/or at most 5 cm, preferably at most 3 cm or at most 1 cm.

4. The impact shield (10) as claimed in claim 2,
**characterized in that**
the second surface section has at least in some sections a surface section adjoining the head impact section (18) and/or has at least in some sections an inner side surface section, which is arranged on an inner side of the impact shield (10).

5. The impact shield (10) as claimed in claim 2,
**characterized in that**
the head impact section (18) is formed at least in some sections from a first material and the second surface section is formed at least in some sections from a second material, wherein first and second material preferably differ, preferably **in that** the first material has a lower modulus of elasticity than the second material and/or **in that** the first material has a higher porosity than the second material and/or due to a chemical composition.

6. The impact shield (10) as claimed in any one of the preceding claims,
**characterized in that**
the setback (19) has a depth of at least 2 cm, preferably at least 3 cm or at least 5 cm, and/or at most 10 cm.

7. The impact shield (10) as claimed in any one of the preceding claims,
**characterized in that**
the setback (19) is formed by a recess, which, except for the cover, is open on top and laterally closed.

8. The impact shield (10) as claimed in any one of the preceding claims,
**characterized in that**
the setback (19) is formed by a recess, which, except for the cover, is open on top and on at least one or at least two, in particular opposite sides, preferably a left and a right side, and is closed on the other side or sides.

9. The impact shield (10) as claimed in any one of the preceding claims,
**characterized in that**
the setback (19) and/or the softer section extends/extend over an area of at least 10 cm², preferably at least 30 cm², and/or at most 400 cm², preferably at most 250 cm².

10. The impact shield (10) as claimed in any one of the preceding claims,
**characterized in that**
the setback (19) and/or the softer section has/have a distance of at least 2 cm and/or at most 10 cm from an upper edge of an inner side of the impact shield (10) and/or a rear edge of an upper side (11) of the impact shield (10) and/or has/have a distance of at least 2 cm and/or at most 10 cm from a front edge of a/the upper side (11).

11. The impact shield (10) as claimed in any one of the preceding claims,
**characterized in that**
an upper side (11) of the impact shield (10) slopes forward at least in some sections in at least one usage state, wherein an angle in relation to the horizontal and/or a lower side (13) of the impact shield (10) is preferably greater than 20° at least in some sections, furthermore is preferably greater than 30°, possibly is greater than 40° and/or **characterized in that** at least one rear point of the upper side of the impact shield is located by at least 20%, preferably at least 30% or at least 50%, of a height of the impact shield above a level of at least one front point of the upper side in relation to the rear point.

12. The impact shield (10) as claimed in any one of the preceding claims,
**characterized in that**
the upper side (11) of the impact shield (10) slopes forward at least in some sections in at least one usage state, wherein an angle in relation to the horizontal and/or a lower side (13) of the impact shield (10) is preferably less than 80° at least in some sections
and/or
**characterized in that** no rear point of the upper side of the impact shield exists, which is located by more than 80% or more than 70% of a height of the impact shield above a level of all front points of the upper side in relation to the rear point.

13. A child seat, comprising an impact shield (10) as claimed in any one of the preceding claims.

14. The child seat as claimed in claim 13,
**characterized in that**
an upper side (11) of the impact shield (10) slopes forward at least in some sections in at least one usage state, wherein an angle in relation to the horizontal and/or a lower side (13) of the impact shield (10) is preferably greater than 20° at least in some sections, furthermore is preferably greater than 30°, possibly is greater than 40° and/or **characterized in that** at least one rear point of the upper side of the impact shield is located by at least 20%, preferably at least 30% or at least 50%, of a height of the impact shield above a level of at least one front point of the upper side in relation to the rear point.

## Revendications

1. Bouclier d'impact (10) pour un siège pour enfant à installer sur un siège de véhicule à moteur, lequel siège pour enfant possède un corps principal pour recevoir un enfant, le bouclier d'impact (10) comportant une première section de surface, à savoir une section recevant l'impact de la tête (18) que la tête de l'enfant vient heurter en cas de décélération brutale, laquelle section recevant l'impact de la tête (18) présente au moins un renfoncement (19), **caractérisé en ce que** le renfoncement (19) est couvert par une couverture.

2. Bouclier d'impact (10) selon la revendication 1, **caractérisé en ce que** la section recevant l'impact de la tête est au moins en partie plus souple qu'au moins une deuxième section de surface du bouclier d'impact (10).

3. Bouclier d'impact (10) selon la revendication 1, dans lequel la couverture présente de préférence une épaisseur d'au moins 0,1 mm ou au moins 1 mm et/ou au maximum 5 cm, de préférence au maximum 3 cm ou au maximum 1 cm.

4. Bouclier d'impact (10) selon la revendication 2, **caractérisé en ce que** la deuxième section de surface présente au moins en partie une section de surface limitrophe de la section recevant l'impact de la tête (18), et/ou au moins en partie une section de surface intérieure qui est disposée sur une face intérieure du bouclier d'impact (10).

5. Bouclier d'impact (10) selon la revendication 2, **caractérisé en ce que** la section recevant l'impact de la tête (18) est faite au moins en partie d'un premier matériau et la deuxième section de surface au moins en partie d'un deuxième matériau, le premier matériau et le deuxième étant de préférence différents, de préférence en cela que le premier matériau a un module d'élasticité plus bas que le deuxième matériau et/ou en cela que le premier matériau est plus poreux que le deuxième matériau et/ou par leur composition chimique.

6. Bouclier d'impact (10) selon l'une des revendications précédentes, **caractérisé en ce que** le renfoncement (19) présente une profondeur d'au moins 2 cm, de préférence d'au moins 3 cm ou au moins 5 cm, et/ou d'au maximum 10 cm.

7. Bouclier d'impact (10) selon l'une des revendications précédentes, **caractérisé en ce que** le renfoncement (19) est formé par un évidement qui est ouvert vers le haut et fermé sur les côtés, mis à part la couverture.

8. Bouclier d'impact (10) selon l'une des revendications précédentes, **caractérisé en ce que** le renfoncement (19) est formé par un évidement qui est ouvert vers le haut, mis à part la couverture, et sur au moins un ou au moins deux côtés, en particulier opposés, de préférence un côté droit et un côté gauche, et fermé sur le ou les autres côtés.

9. Bouclier d'impact (10) selon l'une des revendications précédentes, **caractérisé en ce que** le renfoncement (19) et/ou la partie plus souple s'étendent sur une aire d'au moins 10 cm², de préférence d'au moins 30 cm² et/ou au maximum de 400 cm², de préférence d'au maximum 250 cm².

10. Bouclier d'impact (10) selon l'une des revendications précédentes, **caractérisé en ce que** le renfoncement (19) et/ou la partie plus souple sont éloignés d'au moins 2 cm et/ou au maximum 10 cm d'un bord supérieur d'une face intérieure du bouclier d'impact (10) et/ou d'un bord arrière d'une face supérieure (11) du bouclier d'impact (10) et/ou sont éloignés d'au moins 2 cm et/ou au maximum 10 cm d'un bord avant d'une/de la face supérieure (11).

11. Bouclier d'impact (10) selon l'une des revendications précédentes, **caractérisé en ce qu'**une face supérieure (11) du bouclier d'impact (10) est inclinée au moins en partie vers l'avant dans au moins un état d'utilisation, de sorte qu'un angle par rapport à l'horizontale et/ou à une face inférieure (13) du bouclier d'impact (10) est de préférence, au moins en partie, supérieur à 20°, mieux encore supérieur à 30°, éventuellement supérieur à 40°,
et/ou
**caractérisé en ce qu'**au moins un point postérieur de la face supérieure du bouclier d'impact se trouve à au moins 20 %, de préférence au moins 30 % ou 50 %, d'une hauteur du bouclier d'impact au-dessus du niveau d'au moins un point de la face supérieure situé vers l'avant par rapport au point postérieur.

12. Bouclier d'impact (10) selon l'une des revendications précédentes, **caractérisé en ce qu'**une face supérieure (11) du bouclier d'impact (10) est inclinée au moins en partie vers l'avant dans au moins un état d'utilisation, de sorte qu'un angle par rapport à l'horizontale et/ou à une face inférieure (13) du bouclier d'impact (10) est de préférence, au moins en partie, inférieur à 80°,
et/ou
**caractérisé en ce qu'**il n'existe pas de point postérieur de la face supérieure du bouclier d'impact qui se trouve à plus de 80 % ou plus de 70 % d'une hauteur du bouclier d'impact au-dessus du niveau de tous les points de la face supérieure situés vers l'avant par rapport au point postérieur.

13. Siège pour enfant comprenant un bouclier d'impact (10) selon l'une des revendications précédentes.

14. Siège pour enfant selon la revendication 13, **caractérisé en ce qu'**une face supérieure (11) du bouclier d'impact (10) est inclinée au moins en partie vers l'avant dans au moins un état d'utilisation, de sorte qu'un angle par rapport à l'horizontale et/ou à une face inférieure (13) du bouclier d'impact (10) est de préférence, au moins en partie, supérieur à 20°, mieux encore supérieur à 30°, éventuellement supérieur à 40°, et/ou inférieur à 80°
et/ou
**caractérisé en ce qu'**au moins un point postérieur de la face supérieure du bouclier d'impact se trouve à au moins 20 %, de préférence au moins 30 % ou 50 %, d'une hauteur du bouclier d'impact au-dessus du niveau d'au moins un point de la face supérieure situé vers l'avant par rapport au point postérieur.
